# EUROPEAN PATENT SPECIFICATION

(11) **EP 1 740 010 B1**
(45) Date of publication and mention of the grant of the patent: **04.06.2008**
(21) Application number: 06121783.2
(22) Date of filing: 04.02.2005
(51) Int. Cl.: H04Q 7/38

(54) **Enhanced inter-system handover in a telecommunications system**
Zwischen-System Weiterreichen in einem Telekommunikationssystem
Transfert intersysteme amelioré dans un système de télécommunication

(30) Priority: 18.02.2004 FI 20040259
(43) Date of publication of application: 03.01.2007
(62) Divisional of application: 05100766.4
(73) Proprietor: TeliaSonera Finland Oyj, 00510 Helsinki (FI)
(72) Inventor: Heikkilä, Tommi, FI-02780 Espoo (FI)
(74) Representative: Äkräs, Tapio Juhani

(56) References cited:
- WO-A-01/76313
- WO-A-02/11485
- US-A- 5 940 762

## Description

### FIELD OF THE INVENTION

The invention relates to performing of a handover of a call in a mobile communications system, and more particularly to a handover between different radio access systems.

### BACKGROUND OF THE INVENTION

In the 3^{rd} generation (3G) mobile communications system, in addition to the 3G radio access network UTRAN (Universal Terrestrial Radio Access Network), there may coexist different types of radio access networks, such as a BSS (Base Station Subsystem) of the GSM (Global System for Mobile Communications). Thus a Mobile Station (MS) should be able to fluently change the radio access network when required to gain full radio coverage at an area even if the cells of the radio access networks apply different radio access techniques.

In a cellular mobile communications system, the action of switching from one radio channel to another, during a connection, such as an on-going call, is commonly known as a handover. Switching from one radio channel to another is performed typically when a mobile station moves from the area of one cell to another. In the 3G mobile communications system, different types of handovers may be performed, such as soft handover, softer handover, inter-frequency handover, intra-frequency handover and inter-system handover. When the mobile station changes the radio access network, e.g. from UTRAN to BSS, during a call, an inter-system handover is performed. The inter-system handover may also be referred to as an inter-RAT (Radio Access Technology) handover.

According to the 3GPP (3^{rd} Generation Partnership Project) specifications, the MS measures the signal strength of the GSM cells nearby, and a Radio Network Controller (RNC) of UTRAN requests the MS to verify a Base Station Identity Code (BSIC) of the target cell before the execution of the inter-RAT handover from UTRAN to BSS. Usually it takes the mobile station about 2 to 3 seconds to verify the correct BSIC. The GSM cell is chosen by the RNC, based on the measured signal strength. If the BSIC is not verified by the mobile station for some time, the RNC sends again information on the nearby GSM cells, and the MS starts to measure them again.

WO 02/11485 A discloses a system in which a mobile station and/or a base station have means for providing a coded signal including cell parameter information on the identity of a neighbor cell so as to facilitate a handover of a communication between a serving base station and a second base station serving the neighbor cell without the mobile station accessing or receiving information from the neighbor cell. The mobile station monitors signals from a number of base stations, and determines at least one candidate base station for handover based on the monitoring.

US 5 940 762 A discloses a method for performing an inter-system soft handoff. A base station controller determines if sufficient network resources are available to conduct the handoff. The determination is based on the type of connection between the first and second cellular system, the number of inter-system calls being conducted and the frame offset of the current call.

WO 01/76313 A describes a solution in which search parameters for a preferred base station and a desired number of neighboring base stations are passed to a search engine. A controller evaluates the results of the searches. If one of the neighboring base stations' pilot signal is sufficiently stronger than that of the preferred base station, a handoff is performed and the neighboring base station is assigned as the preferred base station.

One of the problems associated with the above arrangement is that the BSIC of the GSM cell may be inserted wrongly into the UTRAN Operation and Maintenance system (O&M). In that case the mobile station is not able to verify the GSM cell's BSIC, which the RNC has informed of. Also the mobile may behave erroneously when verifying the BSIC. The inter-system handover algorithm in the RNC may e.g. keep suggesting the same cell again and again for BSIC verification even if there could be other cells with correct BSIC's, or even if the mobile station were defective so that it is not able to perform the BSIC verification at all. This may lead to an endless loop, which exploits the resources of the system; for example, a large number of measurements in Compressed Mode (CM) may lead to a UTRAN overload causing dropping of calls and data connections.

### BRIEF DESCRIPTION OF THE INVENTION

An object of the present invention is thus to provide a method, a cellular telecommunications system and a radio network controller for implementing the method so as to overcome the above problems. The objects of the invention are achieved by a method and an arrangement, which are character ized by what is stated in the independent claims. Embodiments of the invention are disclosed in the dependent claims.

The solution of the present application is based on providing a method for preventing a failed handover of a connection from a first radio access system to a second radio access system, wherein a parameter related to the second cell is maintained in an operation and management system and in a first cell. The parameter maintained in the first cell is compared with the parameter maintained in the operation and management system. If the value of the parameter maintained in the first cell is different from the value maintained in the operation and management system, the value maintained in the first cell is rectified to correspond to the value maintained in the operation and management system.

An advantage of the method and arrangement of the present solution is that defective cells may be recognized by the system, and the system may stop suggesting a handover to the defective cells. An endless loop may be prevented, and the system may readily start suggesting a new cell as a second candidate cell instead of the first candidate cell, if the handover to the first candidate cell is not possible. Thus valuable information may be provided to the operation and management system of the mobile network so that the operation of the defective cells may be corrected. Also defective mobile stations may be recognized.

### BRIEF DESCRIPTION OF THE DRAWINGS

In the following the invention will be described in greater detail by means of embodiments with reference to the accompanying drawings, in which
Figure 1 illustrates the mobile communications system according to an embodiment of the present solution;
Figure 2 is a flow chart illustrating the method according to the embodiment of the present solution;
Figure 3 illustrates the mobile communications system according to another embodiment of the present solution;
Figure 4 is a flow chart illustrating the method according to another embodiment of the present solution.

### DETAILED DESCRIPTION OF THE INVENTION

Preferred embodiments of the invention will be described below with reference to a 3G WCDMA (Wideband Code Division Multiple Access) mobile communication system, such as the UMTS (Universal Mobile Telecommunications System), and a 2G mobile communication system, such as the GSM. However, the invention is not restricted to these embodiments, but it may be applied in any mobile communication system implementing two or more different radio access systems. Other examples of such systems are IMT-2000, IS-41 or other similar mobile communication systems, such as the PCS (Personal communication system) or the DCS 1800 (Digital cellular system for 1800 MHz), and systems implementing UMTS TDD (Time Division Duplex) or UMTS FDD (Frequency Division Duplex). Specifications of mobile systems in general and of the IMT-2000 and the UMTS in particular develop rapidly. Such development may require additional changes to be made to the invention. Therefore, all the words and expressions should be interpreted as broadly as possible and they are only intended to illustrate and not to restrict the invention. What is essential for the invention is the function itself and not the network element or the device in which the function is implemented.

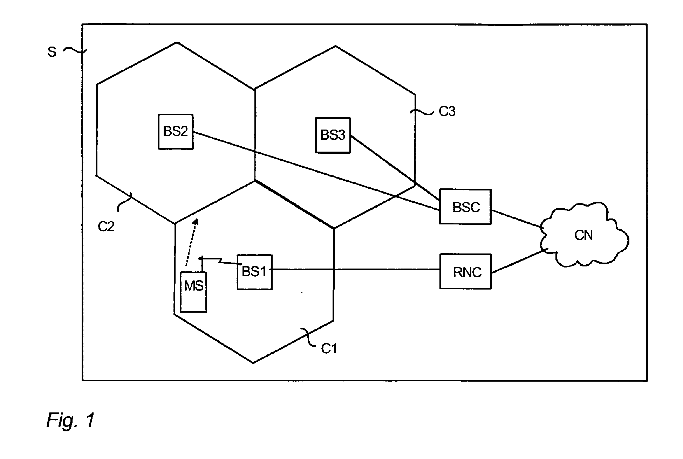

Figure 1 shows a simplified version of the mobile communications system architecture, illustrating only components that are essential to the invention, even though those skilled in the art naturally know that a general mobile communication system also comprises other functions and structures, which do not have to be described in more detail herein. The main parts of the UMTS are a Core Network CN, a UMTS radio access network UTRAN (not indicated in Figure 1) and a mobile station MS, which may also be referred to as user equipment (UE). The UTRAN is a theoretical concept for the 3G radio access network comprising Radio Network Controllers RNC and Base Stations BS1. Accordingly, the BSS (not indicated in Figure 1) is a theoretical concept for the 2G radio access network comprising Base Station Controllers BSC and Base Stations BS2, BS3. The Radio Network Controller RNC is a network node, which controls UTRAN radio resources. In Figure 1, RNC and BSC are connected to the Core Network CN. The Core Network CN comprises network nodes (not shown) such as a Serving GPRS Support Node (SGSN) and a Mobile Switching Centre (MSC). In practice, BSS and UTRAN share some of the core network nodes, but there may also be core network nodes that are not shared, such as separate SGSN's for the 2G and 3G networks.

The core network CN may be connected to external networks (not shown), which may be Circuit-Switched (CS) networks, such as a Public Land Mobile Network (PLMN), a Public Switched Telephone Network (PSTN), and an Integrated Services Digital Network (ISDN), or Packet-Switched (PS) networks, such as the Internet and X.25.

The Mobile Station MS may be a simplified terminal intended only for speech, or it may be a terminal for multiple services operating as a service platform and supporting the loading and execution of different service-related functions. The Mobile Station MS comprises actual mobile equipment (ME) and an associated removable identification card USIM (Universal Subscriber Identity Module), which is also called a subscriber identity module. In this connection, a Mobile Station MS (i.e. user equipment) generally refers to an entity of the actual terminal and the subscriber identity module.

Referring to Figure 1, the system S of the present solution comprises at least one cell of a first access system, for example a UTRAN cell C1 of the UMTS, and at least one cell of a second access system, for example BSS cell C2, C3 of the GSM. For reasons of clarity, only three cells C1, C2, C3 are shown. It is obvious to a person skilled in the art that a mobile communications system may comprise more than three cells. The mobile station MS is located in the area of C1. It is moving towards the area of C2 as indicated by an arrow with a dashed line. If MS is having an on-going connection, such as a call, a handover of the connection from C1 to C2 has to be conducted so that MS will be able to continue the connection in C2.

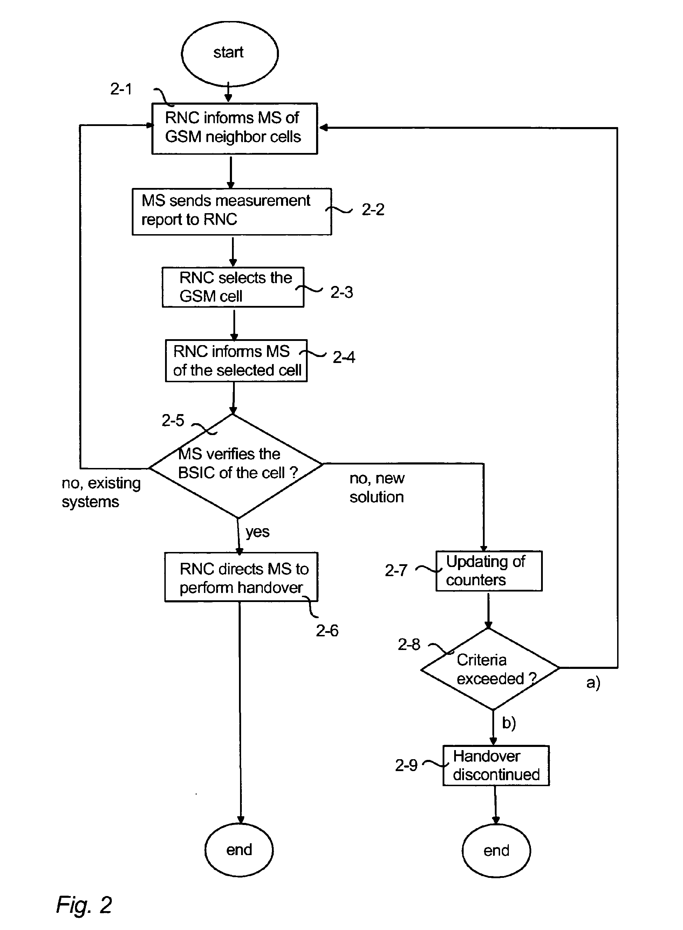

Referring to Figure 2, a flow chart illustrating the method of the invention is shown. It is assumed that MS is located in the cell C1 and moving towards the cell C2 of Figure 1. The handover process of the connection from C1 to C2 begins such that, in step 2-1, RNC informs MS of the neighbouring GSM cells C2, C3 and their frequencies. RNC sends to MS a list comprising information of potential inter-RAT cells C2, C3 and their BSICs, requests MS to remove the information on eventual earlier inter-RAT cells from its memory and to conduct measurements on the potential cells C2, C3 (measurement command message). By means of the BSIC code, MS is able to identify two or more neighboring GSM cells having the same BCCH (Broadcast Control CHannel) frequency. The BSIC code comprises a Network Colour Code (NCC) and a Base Station Colour Code (BCC). In step 2-2, MS conducts measurements on the frequencies of the potential inter-RAT cells C2, C3, such as measurements of the signal strength and quality, and transmits the results to RNC (measurement report message). Based on the results, in step 2-3, RNC selects the best cell, for example the cell having the strongest signal strength. In step 2-4, RNC informs MS of the selected cell, and requests MS to remove the information on the other inter-RAT cells from its memory and to verify the BSIC of the selected cell. In step 2-5, MS tries to verify the BSIC of the selected cell. If the verification of the BSIC is successful, the MS reports this to RNC, and in step 2-6, the RNC requests MS to perform the handover to the selected GSM cell, for example to the cell C2.

In existing systems, if MS is not able to verify the BSIC in step 2-5, the process then returns to step 2-1, where RNC informs MS of the neighbouring GSM cells C2, C3. Then the system would ignore the failed verification of the BSIC, and it would probably suggest a handover to the same cell again as described above with reference to steps 2-1 to 2-5. Thus in existing systems, the handover process may end up into an endless loop because of the failed BSIC verification in step 2-5.

In an embodiment of the present solution, if MS is not able to verify the BSIC in step 2-5, RNC updates one or more counters in step 2-7, and checks in step 2-8 if one or more predefined threshold criteria is fulfilled by comparing the value of the counters to the respective criteria. If the criteria is not exceeded, the handover process a) returns to step 2-1, and continues from there on. However, if at least one criterion is fulfilled in step 2-8, RNC may stop suggesting this GSM cell to MS, i.e. exclude the cell from the list of potential inter-RAT cells, and the handover process may a) return to step 2-1, and continue from there on, or b) it may be discontinued in step 2-9. The criteria may comprise e.g. following situations: 1) the BSIC verification has not occurred during a time X (for example in seconds or milliseconds), 2) RNC has received a number Y of consecutive measurement report messages from MS during a time Z (for example in milliseconds or seconds), 3) RNC has transmitted to MS a number W of consecutive measurement command messages, and/or 4) a number Q of activations of the compressed mode measurements during a time G (for example in seconds or milliseconds) have occurred. X, Y, Z, W, Q and G are parameters that can be predefined in the system by the operator. They may be applied simultaneously, or one or more may be applied separately. Also other criteria may be applied instead or in addition to them. The compressed mode is a way to make room (i.e time slots) for the mobile station so that it can perform measurements on another system, e.g. on GSM cells, in order to define the radio carrier signal level to provide a Receiving Signal Strength Indicator (RSSI) value and to verify BSIC.

If BSIC verification attempts fail to a certain GSM cell, this may be reported to the operation and maintenance system of UTRAN. This function may need counters implemented advantageously into RNC. RNC collects information of the UTRAN cells that have been connected to a mobile station when the BSIC verification has failed. It is checked which UTRAN cells have as a neighbour cell the GSM cell the BSIC of which could not be verified. Those UTRAN cells are kept on the list and the following counters are updated if BSIC verifications fail during a time H (e.g. hours, weeks or months): 1) number of BSIC verification failures from a GSM neighbour cell, 2) number of BSIC verification failures by a certain mobile station (erroneously working mobile), 3) number of consecutive BSIC verification failures from a GSM cell having a RSSI value equal to or over I dBm, 4) number of consecutive BSIC verification failures from a GSM cell having a RSSI value equal to or over J dBm by a certain mobile station (erroneously working mobile), 5) F consecutive BSIC verification failures from a GSM neighbour cell having a RSSI value equal to or over L dBm, 6) K consecutive BSIC verification failures from a GSM neighbour cell having a RSSI value equal to or over M dBm by a certain mobile station (erroneously working mobile). H, I, J, F, K, L, M are parameters that can be set up in RNC and/or O&M of UTRAN.

According to yet another embodiment, if the handover to a first GSM cell fails, the system will suggest a handover to a second GSM cell.

According to yet another embodiment, the predefined threshold criterion may be cell-specific, connection-specific and/or mobile station specific.

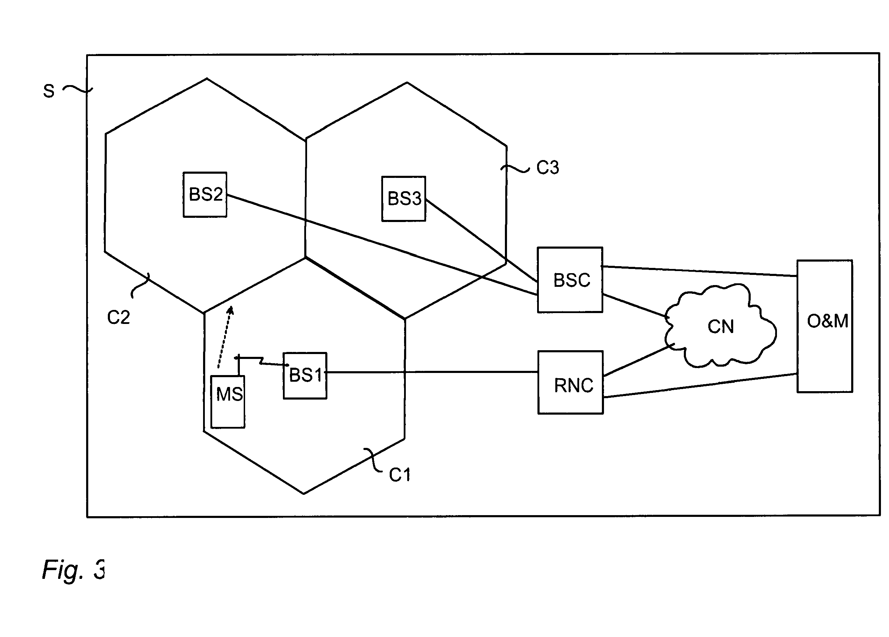

According to yet another embodiment, the UTRAN and GSM systems have a common operation and management system. This is illustrated in Figure 3, which corresponds to Figure 1 with the exception that the common operation and management system O&M shared by the GSM system and the UMTS system is shown.

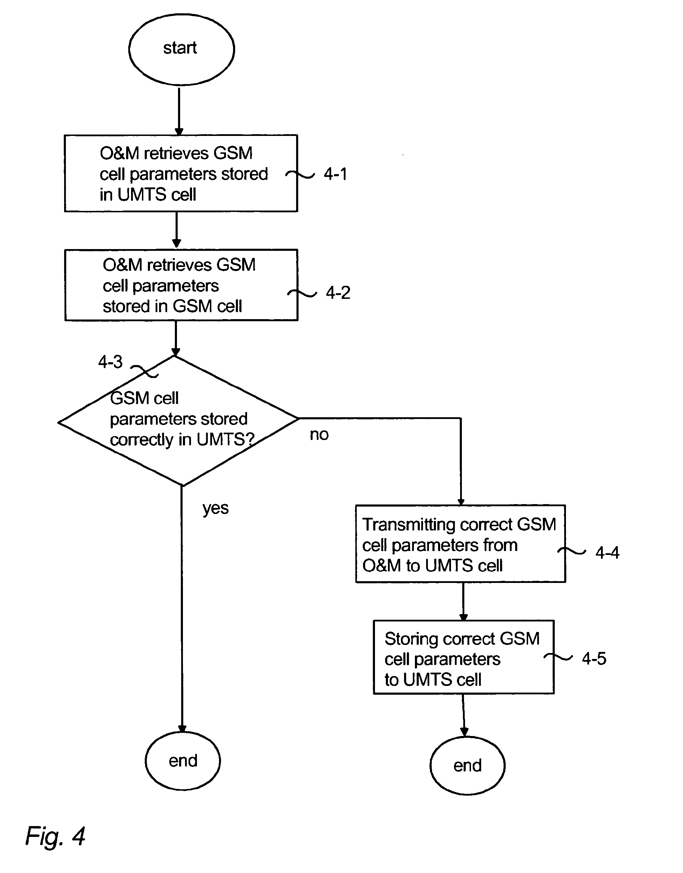

Cell Identity is a parameter by which a cell is identified within one location area. Information on the Cl of a neighbour GSM cell is stored in the UTRAN cell. According to yet another embodiment, the Cl of the GSM cell stored in the UTRAN cell is compared with the Cl maintained in the O&M system. This enables finding of the UTRAN cells wherein incorrect information on GSM cell parameters is stored. Thus the incorrect information can be rectified. This is illustrated in Figure 4, as in step 4-1, O&M retrieves the Cl of the GSM cell stored in the UTRAN cell. In step 4-2, O&M retrieves the Cl of the GSM cell stored in the GSM cell, i.e. the correct Cl. The correct Cl may also already be stored in the O&M. In step 4-3, O&M compares the Cl of the GSM cell stored in the UTRAN cell with the correct Cl. If an error is detected, O&M transmits 4-4 the correct Cl to the UTRAN cell, and the correct Cl value is stored in the UTRAN cell in step 4-5.

According to yet another embodiment, the BSIC, MCC (Mobile Country Code), MNC (Mobile Network Code), LAC (Location Area Code), RAC (Routing Area Code), CH (GSM Channel Number), NCC (Network Color Code) and/or BCC (Base station Color Code) of the GSM cell stored in the UTRAN cell is compared with the BSIC, MCC, MNC, LAC, RAC, CH, NCC and/or BCC of the GSM cell stored in the GSM cell and/or O&M system, respectively. Eventual incorrect information can then be rectified as described above with reference to Figure 4.

According to yet another embodiment, the BSIC, Cl, MCC, MNC, LAC, RAC, CH, NCC and/or BCC of the UTRAN cell stored in the GSM cell are compared with the BSIC, MCC, MNC, LAC, RAC, CH, NCC and/or BCC of the UTRAN cell stored in the UTRAN cell and/or O&M system, respectively. Eventual incorrect information can then be rectified.

The steps shown in Figure 2 are not in an absolute chronological order, and they can be executed in a different order from the given one. Other messages can be transmitted and/or other functions can be carried out between the steps. The messages are only examples and can include only some of the aforementioned information. The messages can also include some other information. It is not essential for the invention in which messages the information is transmitted or which functions and/or equations are used, but it is also possible to use other messages, functions and/or equations than those described above.

In addition to prior art devices, the system, system nodes or mobile stations implementing the operation according to the invention comprise means for updating the threshold counters as described above. The existing network nodes and mobile stations comprise processors and memory, which can be used in the functions according to the invention. All the changes needed to implement the invention can be carried out by means of software routines that can be added or updated and/or routines contained in application specific integrated circuits (ASIC) and/or programmable circuits, such as an electrically programmable logic device EPLD or a field programmable gate array FPGA.

It will be obvious to a person skilled in the art that, as the technology advances, the inventive concept can be implemented in various ways. The invention and its embodiments are not limited to the examples described above but may vary within the scope of the claims.

## Claims

1. A method for preventing a failed handover of a connection from a first radio access system to a second radio access system in a cellular telecommunications system, comprising
at least a first cell (C1) of the first access system,
at least a second cell (C2, C3) of the second access system, and
an operation and management system (O&M) of the cellular telecommunications system,
the method comprising maintaining, in the operation and management system (O&M) and in the first cell (C1), at least one parameter related to the second cell (C2, C3), **characterized by**
using the operation and management system (O&M) to retrieve (4-1) the value of the parameter maintained in the first cell (C1);
comparing (4-3) the value of the parameter maintained in the first cell (C1) with the value of the parameter maintained in the operation and management system (O&M); and
if the value of the parameter maintained in the first cell (C1) is different from the value of the parameter maintained in the operation and management system (O&M), providing (4-4), to the first cell (C1), the value of the parameter maintained in the operation and management system (O&M).

2. The method according to claim 1, **characterized in that** the first access system is a UMTS radio access network (RAN) and the second access system is a GSM base station subsystem (BSS) or vice versa.

3. The method according to claim 1 or 2, **characterized in that** the at least one parameter maintained in the first cell (C1) is one of BSIC, Cl, MCC, MNC, LAC, RAC, CH, NCC and/or BCC.

4. The method according to claim 1, 2 or 3, **characterized in that** the at least one parameter maintained in the operation and management system (O&M) is one of BSIC, CI, MCC, MNC, LAC, RAC, CH, NCC and/or BCC.

5. A cellular telecommunications system (S) comprising
at least a first cell (C1) of a first access system,
at least a second cell (C2, C3) of a second access system, and
an operation and management system (O&M),
wherein the operation and management system (O&M) and the first cell (C1) are configured to maintain at least one parameter related to the second cell (C2, C3), **characterized in that** the cellular telecommunications system (S) is configured to
retrieve, by means of the operation and management system (O&M), the value of the parameter maintained in the first cell (C1);
compare the value of the parameter maintained in the first cell (C1) with the value of the parameter maintained in the operation and management system (O&M); and
if the value of the parameter maintained in the first cell (C1) is different from the value of the parameter maintained in the operation and management system (O&M), the cellular telecommunications system (S) is further configured to provide, to the first cell (C1), the value of the parameter maintained in the operation and management system (O&M).

6. The cellular telecommunications system (S) according to claim 5, **characterized in that** the first access system is a UMTS radio access network (RAN) and the second access system is a GSM base station subsystem (BSS) or vice versa.

7. The cellular telecommunications system (S) according to claim 5 or 6, **characterized in that** the at least one parameter maintained in the first cell (C1) is one of BSIC, CI, MCC, MNC, LAC, RAC, CH, NCC and/or BCC.

8. The cellular telecommunications system (S) according to claim 5, 6 or 7, **characterized in that** the at least one parameter maintained in the operation and management system (O&M) is one of BSIC, Cl, MCC, MNC, LAC, RAC, CH, NCC and/or BCC.

9. A radio network controller (RNC) in a cellular telecommunications system (S), the cellular telecommunications system (S) comprising
at least a first cell (C1) of a first access system,
at least a second cell (C2, C3) of a second access system, and
an operation and management system (O&M),
**characterized in that** the radio network controller (RNC) is configured to
retrieve, by means of the operation and management system (O&M), a value of a first parameter maintained in the first cell (C1) and a value of a second parameter maintained in the operation and management system (O&M), wherein said first and second parameters are related to the second cell (C2, C3);
compare the value of the first parameter with the value of the second parameter; and
if the value of the first parameter is different from the value of the second parameter, the radio network controller (RNC) is further configured to replace the value of the first parameter with the value of the second parameter.

10. The radio network controller (RNC) according to claim 9, **characterized in that** the at least one first and/or second parameter is one of BSIC, CI, MCC, MNC, LAC, RAC, CH, NCC and/or BCC.

## Patentansprüche

1. Verfahren zum Verhindern einer fehlgeschlagenen Übergabe einer Verbindung von einem ersten Funkzugangssystem zu einem zweiten Funkzugangssystem in einem zellularen Telekommunikationssystem, das aufweist:
mindestens eine erste Zelle (C1) des ersten Zugangssystems,
mindestens eine zweite Zelle (C2, C3) des zweiten Zugangssystems, und
ein Betriebs- und Verwaltungssystem (O&M) des zellularen Telekommunikationssystems,
wobei das Verfahren ein Aufrechterhalten mindestens eines sich auf die zweite Zelle (C2, C3) beziehenden Parameters in dem Betriebs- und Verwaltungssystem (O&M) und in der ersten Zelle (C1) aufweist, **gekennzeichnet durch**
Verwenden des Betriebs- und Verwaltungssystems (O&M), um den Wert des in der ersten Zelle (C1) aufrechterhaltenen Parameters abzurufen (4-1);
Vergleichen (4-3) des Werts des in der ersten Zelle (C1) aufrechterhaltenen Parameters mit dem Wert des in dem Betriebs- und Verwaltungssystems (O&M) aufrechterhaltenen Parameters; und
Liefern (4-4) des Werts des in dem Betriebs- und Verwaltungssystem (O&M) aufrechterhaltenen Parameters zu der ersten Zelle (C1), wenn der Wert des in der ersten Zelle (C1) aufrechterhaltenen Parameters zu dem Wert des in dem Betriebs- und Verwaltungssystem (O&M) aufrechterhaltenen Parameters unterschiedlich ist.

2. Verfahren nach Anspruch 1, **dadurch gekennzeichnet, dass** das erste Zugangssystem ein UMTS-Funkzugangsnetz (RAN) ist und das zweite Zugangssystem ein GSM-Basisstations-Untersystem (BBS) ist oder umgekehrt.

3. Verfahren nach Anspruch 1 oder 2, **dadurch gekennzeichnet, dass** der mindestens eine in der ersten Zelle (C1) aufrechterhaltene Parameter einer von BSIC, CI, MCC, MNC, LAC, RAC, CH, NCC und/oder BCC ist.

4. Verfahren nach Anspruch 1, 2 oder 3, **dadurch gekennzeichnet, dass** der mindestens eine in dem Betriebs- und Verwaltungssystem (O&M) aufrechterhaltene Parameter einer von BSIC, CI, MCC, MNC, LAC, RAC, CH, NCC und/oder BCC ist.

5. Zellulares Telekommunikationssystem (S), das aufweist:
mindestens eine erste Zelle (C1) eines ersten Zugangssystems,
mindestens eine zweite Zelle (C2, C3) eines zweiten Zugangssystems, und
ein Betriebs- und Verwaltungssystem (O&M),
wobei das Betriebs- und Verwaltungssystem (O&M) und die erste Zelle dazu ausgelegt sind, einen sich auf die zweite Zelle (C2, C3) beziehenden mindestens einen Parameter aufrechtzuerhalten, **dadurch gekennzeichnet, dass** das zellulare Telekommunikationssystem (S) dazu ausgelegt ist,
den Wert des in der ersten Zelle (C1) aufrechterhaltenen Parameters mittels des Betriebs- und Verwaltungssystems (O&M) abzurufen;
den Wert des in der ersten Zelle (C1) aufrechterhaltenen Parameters mit dem Wert des in dem Betriebs- und Verwaltungssystem (O&M) aufrechterhaltenen Parameters zu vergleichen; und
das zellulare Telekommunikationssystem (S) weiterhin dazu ausgelegt ist, den Wert des in dem Betriebs- und Verwaltungssystem (O&M) aufrechterhaltenen Parameters zu der ersten Zelle (C1) zu liefern, wenn der Wert des in der ersten Zelle (C1) aufrechterhaltenen Parameters zu dem Wert des in dem Betriebs- und Verwaltungssystem (O&M) aufrechterhaltenen Parameters unterschiedlich ist.

6. Zellulares Telekommunikationssystem (S) nach Anspruch 5, **dadurch gekennzeichnet, dass dadurch gekennzeichnet, dass** das erste Zugangssystem ein UMTS-Funkzugangsnetz (RAN) ist und das zweite Zugangssystem ein GSM-Basisstations-Untersystem (BBS) ist oder umgekehrt.

7. Zellulares Telekommunikationssystem (S) nach Anspruch 5 oder 6, **dadurch gekennzeichnet, dass** der mindestens eine in der ersten Zelle (C1) aufrechterhaltene Parameter einer von BSIC, Cl, MCC, MNC, LAC, RAC, CH, NCC und/oder BCC ist.

8. Zellulares Telekommunikationssystem (S) nach Anspruch 5, 6 oder 7, **dadurch gekennzeichnet, dass** der mindestens eine in dem Betriebs- und Verwaltungssystem (O&M) aufrechterhaltene Parameter einer von BSIC, CI, MCC, MNC, LAC, RAC, CH, NCC und/oder BCC ist.

9. Funknetz-Steuereinrichtung (RNC) in einem zellularen Telekommunikationssystem (S), das aufweist:
mindestens eine erste Zelle (C1) eines ersten Zugangssystems,
mindestens eine zweite Zelle (C2, C3) eines zweiten Zugangssystems, und
ein Betriebs- und Verwaltungssystem (O&M),
**dadurch gekennzeichnet, dass** die Funknetz-Steuereinrichtung dazu ausgelegt ist,
einen Wert eines in der ersten Zelle (C1) aufrechterhaltenen Parameters und einen Wert eines in dem Betriebs- und Verwaltungssystem (O&M) aufrechterhaltenen zweiten Parameters mittels des Betriebs- und Verwaltungssystems (O&M) abzurufen, wobei sich die ersten und zweiten Parameter auf die zweite Zelle (C2, C3) beziehen;
den Wert des ersten Parameters mit dem Wert des zweiten Parameters zu vergleichen; und
die Funknetz-Steuereinrichtung (RNC) weiterhin dazu ausgelegt ist, den Wert des ersten Parameters durch den Wert des zweiten Parameters zu ersetzen, wenn der Wert des ersten Parameters zu dem Wert des zweiten Parameters unterschiedlich ist.

10. Funknetz-Steuereinrichtung (RNC) nach Anspruch 9, **dadurch gekennzeichnet, dass** der mindestens eine erste und/oder zweite Parameter einer von BSIC, Cl, MCC, MNC, LAC, RAC, CH, NCC und/oder BCC ist.

## Revendications

1. Procédé permettant d'empêcher un échec de transfert intercellulaire d'une connexion d'un premier système d'accès radio à un second système d'accès radio dans un système cellulaire de télécommunications, comprenant
au moins une première cellule (C1) du premier système d'accès,
au moins une seconde cellule (C2, C3) du second système d'accès, et
un système d'exploitation et de gestion (O&M) du système cellulaire de télécommunications,
le procédé comprenant une conservation, dans le système d'exploitation et de gestion (O&M) et dans la première cellule (C1), d'au moins un paramètre associé à la seconde cellule (C2, C3), **caractérisé par**
une utilisation du système d'exploitation et de gestion (O&M) pour récupérer (4-1) la valeur du paramètre conservé dans la première cellule (C1);
une comparaison (4-3) de la valeur du paramètre conservé dans la première cellule (C1) avec la valeur du paramètre conservé dans le système d'exploitation et de gestion (O&M) ; et
si la valeur du paramètre conservé dans la première cellule (C1) est différente de la valeur du paramètre conservé dans le système d'exploitation et de gestion (O&M), une fourniture (4-4), à la première cellule (C1), de la valeur du paramètre conservé dans le système d'exploitation et de gestion (O&M).

2. Procédé selon la revendication 1, **caractérisé en ce que** le premier système d'accès est un réseau d'accès radio (RAN) UMTS et le second système d'accès est un sous-système de station de base (BSS) GSM ou vice versa.

3. Procédé selon la revendication 1 ou 2, **caractérisé en ce que** le au moins un paramètre conservé dans la première cellule (C1) est un paramètre parmi BSIC, CI, MCC, MNC, LAC, RAC, CH, NCC et/ou BCC.

4. Procédé selon la revendication 1, 2 ou 3, **caractérisé en ce que** le au moins un paramètre conservé dans le système d'exploitation et de gestion (O&M) est un paramètre parmi BSIC, CI, MCC, MNC, LAC, RAC, CH, NCC et/ou BCC.

5. Système cellulaire (S) de télécommunications comprenant
au moins une première cellule (C1) d'un premier système d'accès,
au moins une seconde cellule (C2, C3) d'un second système d'accès, et
un système d'exploitation et de gestion (O&M),
dans lequel le système d'exploitation et de gestion (O&M) et la première cellule (C1) sont configurés pour conserver au moins un paramètre associé à la seconde cellule (C2, C3), **caractérisé en ce que** le système cellulaire (S) de télécommunications est configuré pour
récupérer, au moyen du système d'exploitation et de gestion (O&M), la valeur du paramètre conservé dans la première cellule (C1) ;
comparer la valeur du paramètre conservé dans la première cellule (C1) à la valeur du paramètre conservé dans le système d'exploitation et de gestion (O&M) ; et
si la valeur du paramètre conservé dans la première cellule (C1) est différente de la valeur du paramètre conservé dans le système d'exploitation et de gestion (O&M), le système cellulaire (S) de télécommunications est en outre configuré pour fournir à la première cellule (C1) la valeur du paramètre conservé dans le système d'exploitation et de gestion (O&M).

6. Système cellulaire (S) de télécommunications selon la revendication 5, **caractérisé en ce que** le premier système d'accès est un réseau d'accès radio (RAN) UMTS et le second système d'accès est un sous-système de station de base (BSS) GSM ou vice versa.

7. Système cellulaire (S) de télécommunications selon la revendication 5 ou 6, **caractérisé en ce que** le au moins un paramètre conservé dans la première cellule (C1) est un paramètre parmi BSIC, CI, MCC, MNC, LAC, RAC, CH, NCC et/ou BCC.

8. Système cellulaire (S) de télécommunications selon la revendication 5, 6 ou7, **caractérisé en ce que** le au moins un paramètre conservé dans le système d'exploitation et de gestion (O&M) est un paramètre parmi BSIC, CI, MCC, MNC, LAC, RAC, CH, NCC et/ou BCC.

9. Contrôleur de réseau radio (RNC) dans un système cellulaire (S) de télécommunications, le système cellulaire (S) de télécommunications comprenant
au moins une première cellule (C1) d'un premier système d'accès,
au moins une seconde cellule (C2, C3) d'un second système d'accès, et
un système d'exploitation et de gestion (O&M),
**caractérisé en ce que** le contrôleur de réseau radio (RNC) est configuré pour
récupérer, au moyen du système d'exploitation et de gestion (O&M), une valeur d'un premier paramètre conservé dans la première cellule (C1) et une valeur d'un second paramètre conservé dans le système d'exploitation et de gestion (O&M), dans lequel lesdits premier et second paramètres sont associés à la seconde cellule (C2, C3) ;
comparer la valeur du premier paramètre à la valeur du second paramètre ; et
si la valeur du premier paramètre est différente de la valeur du second paramètre, le contrôleur de réseau radio (RNC) est en outre configuré pour remplacer la valeur du premier paramètre par la valeur du second paramètre.

10. Contrôleur de réseau radio (RNC) selon la revendication 9, **caractérisé en ce que** le au moins premier et/ou second paramètre est un paramètre parmi BSIC, CI, MCC, MNC, LAC, RAC, CH, NCC et/ou BCC.
